# FASCICULE DE BREVET EUROPEEN

(11) **EP 2 851 291 B1**
(45) Date de publication et mention de la délivrance du brevet: **11.05.2016**
(21) Numéro de dépôt: 13185480.4
(22) Date de dépôt: 23.09.2013
(51) Int. Cl.: B64C 13/00, G05D 1/00, B64C 19/00

(54) **Système de commande d'un aéronef**
Steuersystem eines Luftfahrzeugs
Aircraft control system

(43) Date de publication de la demande: 25.03.2015
(73) Titulaire: AIRBUS OPERATIONS (S.A.S), 31060 Toulouse (FR); Airbus (S.A.S.), 31700 Blagnac (FR); Airbus Operations GmbH, 21129 Hamburg (DE)
(72) Inventeur: De Rammelaere, Werner, 31170 TOURNEFEUILLE (FR); Laperche, Jean-Claude, 31770 COLOMIERS (FR); Rebut, Mathieu, 31200 TOULOUSE (FR); Berthe, Benoit, 31500 TOULOUSE (FR); Hintze, Hartmut, 21493 SCHWARZENBEK (DE); Krittian, Sebastian, 22609 HAMBURG (DE)
(74) Mandataire: Sarraméa, Claude

(56) Documents cités:
- EP-A2- 2 595 023
- WO-A1-95/29434
- US-A- 4 422 180
- US-A1- 2004 098 140
- US-A1- 2006 100 750

## Description

La présente invention concerne un système de commande d'un aéronef. Les aéronefs modernes, en particulier les avions de transport, comportent un système de commande permettant de contrôler les différentes fonctions desdits aéronefs : commandes de vol, gestion du vol de type FMS (« Flight Management System » en anglais), gestion des alertes FWS (« Flight Warning System » en anglais), téléchargement de données, etc. Ce système de commande comporte généralement un ensemble de calculateurs qui peuvent être aussi bien des calculateurs dédiés aux différentes fonctions, alors nommés LRU (« Line Replacable Unit » en anglais), que des calculateurs génériques dans lesquels sont programmées les différentes fonctions. Ces calculateurs génériques constituent une architecture avionique modulaire intégrée dite IMA (« Integrated Modular Avionics » en anglais). Pour des raisons de sûreté aérienne, les autorités de certification exigent que les différentes fonctions mises en oeuvre dans l'aéronef aient un niveau d'assurance qualité suffisant pour garantir la sécurité de l'aéronef. Ce niveau d'assurance qualité est généralement appelé DAL (« Design Assurance Level » en anglais). Les exigences règlementaires relatives au niveau DAL des différentes fonctions d'un aéronef sont exprimées dans le document Eurocae ED-79A / SAE ARP 4754A. Ce document définit cinq niveaux d'assurance qualité pour les fonctions d'un aéronef, respectivement nommés DAL-A, DAL-B, DAL-C, DAL-D et DAL-E par ordre décroissant d'exigences. Le niveau DAL-A correspond à des fonctions dont une défaillance aurait un impact catastrophique pour l'aéronef ; le niveau DAL-B correspond à des fonctions dont une défaillance aurait un impact dangereux pour l'aéronef ; le niveau DAL-C correspond à des fonctions dont une défaillance aurait un impact majeur pour l'aéronef; le niveau DAL-D correspond à des fonctions dont une défaillance aurait un impact mineur pour l'aéronef ; le niveau DAL-E correspond à des fonctions dont une défaillance n'aurait pas de conséquence pour la sécurité de l'aéronef. Ainsi, par exemple, les commandes de vol de l'aéronef correspondent à une fonction de niveau DAL-A ; à contrario, les fonctions relatives au divertissement des passagers sont de niveau DAL-E.

Le niveau d'assurance qualité requis pour une fonction de l'aéronef implique des exigences relatives au niveau d'assurance qualité des différents systèmes (calculateurs, alimentations électriques, réseaux de communication, etc.) utilisés pour mettre en oeuvre cette fonction. Ces exigences de niveau d'assurance qualité desdits systèmes sont définies, en fonction du niveau d'assurance qualité requis pour ladite fonction, dans le document Eurocae ED-79A / SAE ARP 4754A, tant en ce qui concerne l'aspect matériel qu'en ce qui concerne l'aspect logiciel desdits systèmes. Pour cela, ce document définit plusieurs niveaux d'assurance qualité pour les systèmes, ces niveaux étant eux aussi nommés DAL-A, DAL-B, DAL-C, DAL-D et DAL-E par ordre décroissant d'exigences. Les normes DO-254 d'une part et DO-178B (ou DO-178C) d'autre part, précisent des contraintes de développement à respecter en fonction du niveau d'assurance qualité requis pour un système, respectivement pour l'aspect matériel et pour l'aspect logiciel dudit système.

Les fonctions critiques pour le vol de l'aéronef (fonctions DAL-A) doivent ainsi être mises en oeuvre par des systèmes DAL-A. De plus, certaines fonctions, telles que les commandes de vol, sont généralement mises en oeuvre de façon dissimilaire sur différents systèmes DAL-A de façon à éviter des modes de panne communs. A contrario, les fonctions ne présentant aucune criticité pour le vol de l'aéronef (fonctions DAL-E) peuvent être mises en oeuvre par des systèmes DAL-E. Le niveau DAL-E correspond généralement à des systèmes disponibles sur étagère dans le commerce, parfois appelés COTS (« Components On The Shelf » en anglais).

Les systèmes DAL-A doivent faire l'objet d'un processus de développement long et coûteux afin de respecter le niveau d'exigences requis. Il en résulte par exemple que les composants électroniques utilisés doivent être éprouvés depuis plusieurs années avant de pouvoir être mis en oeuvre dans un système DAL-A. De plus, ces composants sont choisis dans des gammes de composants aptes à supporter des conditions environnementales sévères, tant en matière de température de fonctionnement que de vibrations. Par ailleurs, la durée de vie d'un aéronef est généralement de plusieurs dizaines d'années. D'autre part, un même type d'aéronef est également fabriqué, en général, pendant plusieurs dizaines d'années. Par conséquent, il peut s'écouler plus de 50 ou 60 ans entre la conception d'un type d'aéronef et l'arrêt de l'exploitation du dernier aéronef de ce type. Une telle durée est incompatible avec la durée de commercialisation des composants électroniques utilisés, laquelle est généralement inférieure à une dizaine d'années dans le meilleur des cas. Cela oblige les fabricants desdits systèmes à stocker les composants nécessaires en nombre suffisant pour assurer tant la maintenance que la fabrication des systèmes pour les nouveaux aéronefs sur une période de plusieurs dizaines d'années.

Le document EP2.595.023 A2 décrit un système de contrôle d'un aéronef. Ce système comporte quatre canaux comprenant chacun une alimentation électrique, une interface recevant des signaux de manipulation provenant d'une IHM utilisée par le pilote, une unité de traitement arithmétique qui calcule un signal de commande des actionneurs en fonction des signaux de manipulation, ainsi qu'une unité de détermination de signal qui détermine, parmi les signaux de commande calculés par les unités de traitement arithmétiques du canal considéré et d'autres canaux, quel signal est utilisé pour la commande des actionneurs associés au canal considéré.

La présente invention a pour objet de remédier aux inconvénients précités. Elle concerne un système de commande d'au moins un dispositif commandé d'un aéronef, ce système de commande étant embarqué dans l'aéronef et comportant :
- au moins deux réseaux de communication distincts ; et
- au moins une unité de contrôle associée à cet au moins un dispositif commandé, cette unité de contrôle étant raccordée à l'un au moins desdits réseaux de communication,
ledit système de commande étant configuré pour déterminer et fournir des ordres de commande à ce dispositif commandé, la détermination desdits ordres de commande correspondant à une première fonction de l'aéronef ayant une exigence de niveau d'assurance qualité DAL-A.

Ce système de commande est remarquable en ce qu'il comporte en outre :
- un ensemble d'au moins trois unités physiques comportant chacune une alimentation électrique et un dispositif d'interface réseau raccordé à l'un au moins desdits réseaux de communication de l'aéronef, dans lequel :
   - les alimentations électriques des différentes unités physiques sont d'au moins trois types différents ;
   - les dispositifs d'interface réseau des différentes unités physiques sont d'au moins trois types différents ;
   - chacune des unités physiques comporte au moins deux calculateurs comprenant chacun un système d'exploitation ;
   - les différents calculateurs des différentes unités sont d'au moins deux types différents ;
   - les systèmes d'exploitation des différents calculateurs sont d'au moins deux types différents ;
   - au moins six desdits calculateurs sont configurés pour élaborer indépendamment des ordres de commande dudit dispositif commandé, ces ordres de commande correspondant à ladite première fonction ;
   - les différents calculateurs ont chacun un niveau d'assurance qualité matériel et/ou logiciel DAL-C, DAL-D ou DAL-E ;
   et
- une unité logique de sélection dont le niveau d'assurance qualité matériel et logiciel est DAL-A, cette unité logique de sélection étant raccordée à ces au moins deux réseaux de communication et étant configurée pour sélectionner des ordres de commande valides parmi les ordres de commande élaborés par les calculateurs,

l'unité de contrôle associée audit dispositif commandé étant configurée pour commander le dispositif commandé en fonction des ordres de commande valides sélectionnés par l'unité logique de sélection.

Ce système permet donc l'utilisation de calculateurs ayant un niveau d'assurance qualité matériel et/ou logiciel DAL-C, DAL-D ou DAL-E pour mettre en oeuvre une fonction ayant une exigence de niveau d'assurance qualité DAL-A, au lieu de nécessiter des calculateurs ayant un niveau DAL-A comme les systèmes de l'art antérieur. Il en résulte des coûts et des temps de développement beaucoup moins importants que pour les systèmes de l'art antérieur. Par conséquent, les matériels utilisés pour ces calculateurs peuvent être renouvelés régulièrement au fur et à mesure de l'évolution technologique, sans que cela représente un coût prohibitif. L'utilisation de calculateurs ayant un niveau d'assurance qualité moindre que ceux de l'art antérieur est rendu possible grâce à la conformation du système de commande selon l'invention : la combinaison astucieuse d'équipements (unités physiques, calculateurs, alimentations, dispositifs d'interface réseau...) de types différents permet de garantir le fonctionnement correct d'au moins un calculateur avec une probabilité de panne compatible avec l'exigence de niveau d'assurance qualité DAL-A requis pour ladite fonction. De plus, le regroupement de plusieurs calculateurs dans des unités physiques permet de partager leurs alimentations électriques et leurs dispositifs d'interface réseau, donc de diminuer la masse, l'encombrement et le coût du système de commande.

De façon avantageuse, lesdits au moins six calculateurs sont configurés pour élaborer les ordres de commande du dispositif commandé, correspondant à la première fonction, selon un mode d'élaboration desdits ordres de commande commun à ces au moins six calculateurs. Cela évite une mise en oeuvre dissimilaire de la première fonction sur différents calculateurs, permettant ainsi de réduire encore les temps de développement et les coûts.

De préférence, les différentes alimentations électriques et les différents dispositifs d'interface réseau ont chacun un niveau d'assurance qualité matériel et/ou logiciel DAL-E. Cela permet de choisir ces matériels parmi les matériels disponibles dans le commerce, sans nécessiter des coûts de développement spécifiques.

Dans un mode particulier de réalisation, l'ensemble d'unités physiques comporte trois unités physiques comprenant chacune trois calculateurs de trois types différents, les différents calculateurs ayant chacun un niveau d'assurance qualité matériel et/ou logiciel DAL-C.

Dans un autre mode de réalisation, l'ensemble d'unités physiques comporte quatre unités physiques comprenant chacune au moins trois calculateurs ayant chacun un niveau d'assurance qualité matériel et/ou logiciel DAL-E, dans lequel :
- les différents calculateurs sont de quatre types différents ;
- chaque unité physique comporte des calculateurs d'au moins deux types différents ;
- les alimentations électriques des quatre unités physiques sont toutes de types différents ;
- les dispositifs d'interface réseau des quatre unités physiques sont tous de types différents ;
- les systèmes d'exploitation des au moins trois calculateurs de chaque unité physique sont d'au moins trois types différents.

Selon une première variante, chacune des quatre unités physiques comporte trois calculateurs de deux types différents, chaque calculateur étant configuré pour élaborer des ordres de commande du dispositif commandé, ces ordres de commande correspondant à ladite première fonction.

Selon une deuxième variante, chacune des quatre unités physiques comporte six calculateurs ayant chacun un niveau d'assurance qualité matériel et/ou logiciel DAL-E.

Avantageusement, une partie des calculateurs n'est pas configurée pour mettre en oeuvre une fonction ayant une exigence de niveau d'assurance qualité DAL-A ou DAL-B, ces calculateurs étant configurés pour mettre en oeuvre au moins une seconde fonction ayant une exigence de niveau d'assurance qualité DAL-C, DAL-D ou DAL-E.

De façon avantageuse, au moins une partie des calculateurs configurés pour élaborer les ordres de commande correspondant à ladite première fonction sont également configurés pour mettre en oeuvre au moins une troisième fonction ayant une exigence de niveau d'assurance qualité DAL-A ou DAL-B.

Selon une première alternative, l'unité logique de sélection est intégrée dans un calculateur distinct de l'unité de contrôle associée au dispositif commandé. Selon une autre alternative, l'unité logique de sélection est intégrée dans l'unité de contrôle associée au dispositif commandé.

Dans un mode particulier de réalisation, la première fonction est relative à des commandes de vol de l'aéronef et le dispositif commandé comprend un actionneur d'une surface de vol mobile de l'aéronef.

De façon préférée, les différentes unités physiques sont protégées par au moins un dispositif de protection environnementale.

L'invention concerne aussi un aéronef comportant un système de commande tel que précité.

L'invention sera mieux comprise à la lecture de la description qui suit et à l'examen des figures annexées.
La figure 1 représente un système de commande conforme à un mode de réalisation de l'invention.
La figure 2 illustre la représentation utilisée pour un calculateur du système de commande.
Les figures 3 à 5 représentent différents modes de réalisation d'un système de commande conforme à l'invention.
La figure 6 représente un système de commande de vol selon un mode de réalisation conforme à l'invention.

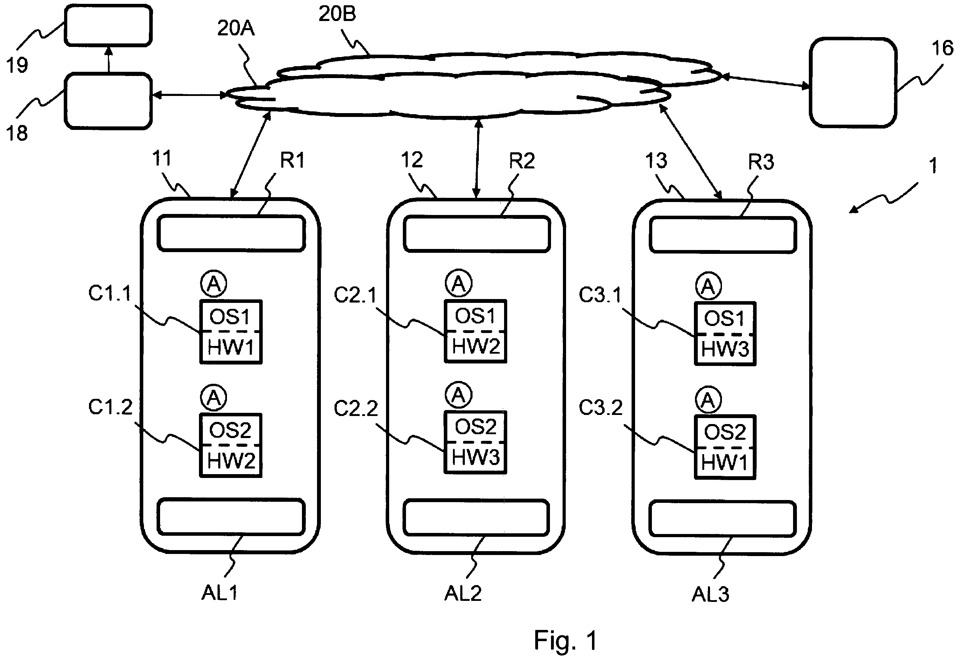

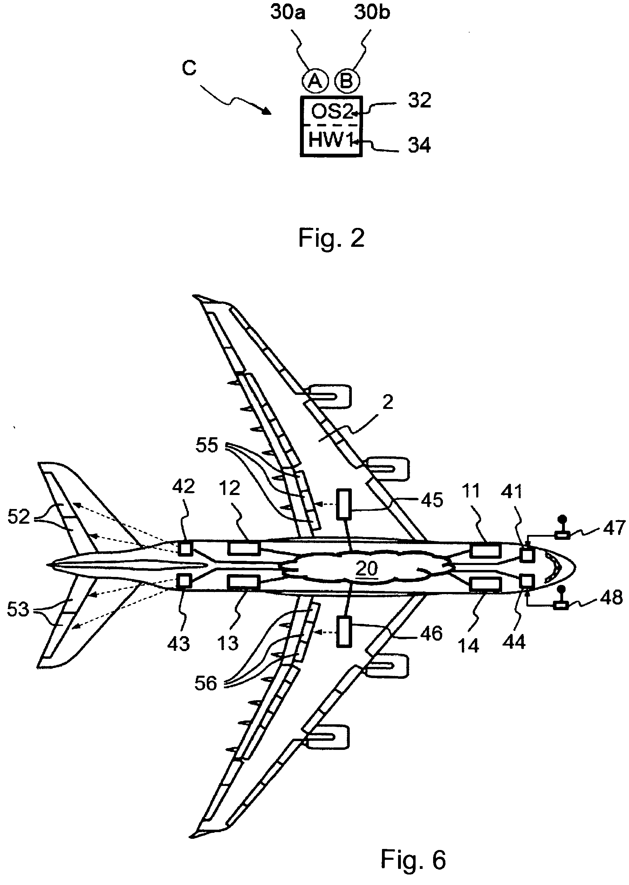

Le système de commande 1 d'un aéronef, tel que représenté sur la figure 1, comporte un ensemble de trois unités physiques 11, 12, 13, lesquelles comprennent chacune une alimentation électrique, respectivement AL1, AL2, AL3, et un dispositif d'interface réseau, respectivement R1, R2, R3. Ces trois alimentations sont toutes de types différents. De même, les trois dispositifs d'interface réseau sont tous de types différents. Chacune des trois unités physiques est reliée, par l'intermédiaire de son dispositif d'interface réseau, à deux réseaux de communication 20A, 20B de l'aéronef. De préférence, ces réseaux de communication sont de type Ethernet commuté déterministe, par exemple conformes au standard ARINC 664 part 7 davantage connu sous l'appellation AFDX. Chaque unité physique comprend deux calculateurs : C1.1 et C1.2 pour l'unité physique 11, C2.1 et C2.2 pour l'unité physique 12, C3.1 et C3.2 pour l'unité physique 13. La figure 2 illustre la représentation utilisée pour ces calculateurs. Ainsi, l'illustration d'un calculateur C représente le système d'exploitation 32 utilisé sur ce calculateur, ainsi que le type matériel 34 dudit calculateur. Le calculateur représenté sur la figure 2 est du type matériel HW1 et comporte un système d'exploitation OS2. Le terme système d'exploitation est utilisé dans son sens le plus large, c'est-à-dire incluant les couches logicielles intermédiaires (« middleware » en anglais). Au moins un cercle 30a, 30b est représenté en partie haute de la figure. Chaque cercle contient une lettre A, B, C, D ou E correspondant à l'exigence de niveau d'assurance qualité d'au moins une fonction mise en oeuvre par ce calculateur C. La lettre A correspond au niveau DAL-A, la lettre B correspond au niveau DAL-B, la lettre C correspond au niveau DAL-C, la lettre D correspond au niveau DAL-D et la lettre E correspond au niveau DAL-E. Deux cercles 30a et 30b sont associés au calculateur C représenté sur la figure 2. Ces deux cercles contiennent respectivement les lettres A et B. Cela signifie que le calculateur C met en oeuvre au moins une fonction ayant une exigence de niveau d'assurance qualité DAL-A et au moins une fonction ayant une exigence de niveau d'assurance qualité DAL-B. Le terme « fonction mise en oeuvre par un calculateur » signifie que ce calculateur détermine des ordres de commande d'un dispositif commandé, conformément à ladite fonction.

Les six calculateurs représentés sur la figure 1 mettent en oeuvre chacun au moins une fonction ayant une exigence de niveau d'assurance qualité DAL-A. Les deux calculateurs de chaque unité physique sont de deux types matériels différents : HW1 et HW2 pour les calculateurs C1.1 et C1.2 de l'unité physique 11, HW2 et HW3 pour les calculateurs C2.1 et C2.2 de l'unité physique 12, HW3 et HW1 pour les calculateurs C3.1 et C3.2 de l'unité physique 13. Les systèmes d'exploitation des deux calculateurs de chaque unité physique sont de deux types différents OS1 et OS2. Ces six calculateurs ont chacun un niveau d'assurance qualité matériel et/ou logiciel DAL-C, DAL-D ou DAL-E. Ce niveau d'assurance qualité logiciel correspond au niveau d'assurance qualité du système d'exploitation, incluant les couches logicielles intermédiaires comme indiqué précédemment. Chacun des six calculateurs est relié au dispositif d'interface réseau R1, R2, R3 de l'unité physique dont il fait partie.

Le système de commande 1 comporte en outre une unité de contrôle 18 d'un dispositif commandé 19 de l'aéronef. L'unité de contrôle 18 est reliée aux deux réseaux de communication 20A et 20B. Le système de commande 1 est configuré pour déterminer et fournir des ordres de commande au dispositif commandé 19, la détermination desdits ordres de commande correspondant à une première fonction de l'aéronef ayant une exigence de niveau d'assurance qualité DAL-A. Pour cela, les six calculateurs C1.1, C1.2, C2.1, C2.2, C3.1 et C3.2 sont configurés pour mettre en oeuvre cette première fonction. Ces six calculateurs sont ainsi configurés pour élaborer indépendamment les ordres de commande du dispositif commandé 19 et pour transmettre chacun ces ordres de commande sur les réseaux de communication 20A et 20B par l'intermédiaire du dispositif d'interface réseau R1, R2 ou R3 auquel il est relié. Pour cela, une application logicielle correspondant à la première fonction est chargée dans chacun des six calculateurs. Cette application logicielle respecte les exigences de niveau d'assurance qualité de la première fonction à laquelle elle correspond, à savoir DAL-A.

Le système de commande 1 comporte également une unité logique de sélection 16 ayant un niveau d'assurance qualité matériel et logiciel DAL-A. Cette unité logique de sélection est raccordée aux deux réseaux de communication 20A et 20B. Elle est configurée pour recevoir les ordres de commande élaborés par les calculateurs et pour sélectionner des ordres de commande valides parmi ces ordres de commande élaborés par les calculateurs. La sélection des ordres de commande valides peut par exemple être réalisée en utilisant le principe connu de voteur. L'unité de contrôle 18 associée au dispositif commandé 19 est configurée pour commander le dispositif commandé 19 en fonction des ordres de commande valides sélectionnés par l'unité logique de sélection 16.

De préférence, les différentes alimentations électriques AL1, AL2, AL3 et les différents dispositifs d'interface réseau R1, R2, R3 ont chacun un niveau d'assurance qualité matériel et/ou logiciel DAL-E. Cela permet de choisir ces matériels parmi les matériels disponibles dans le commerce, sans nécessiter des coûts de développement spécifiques.

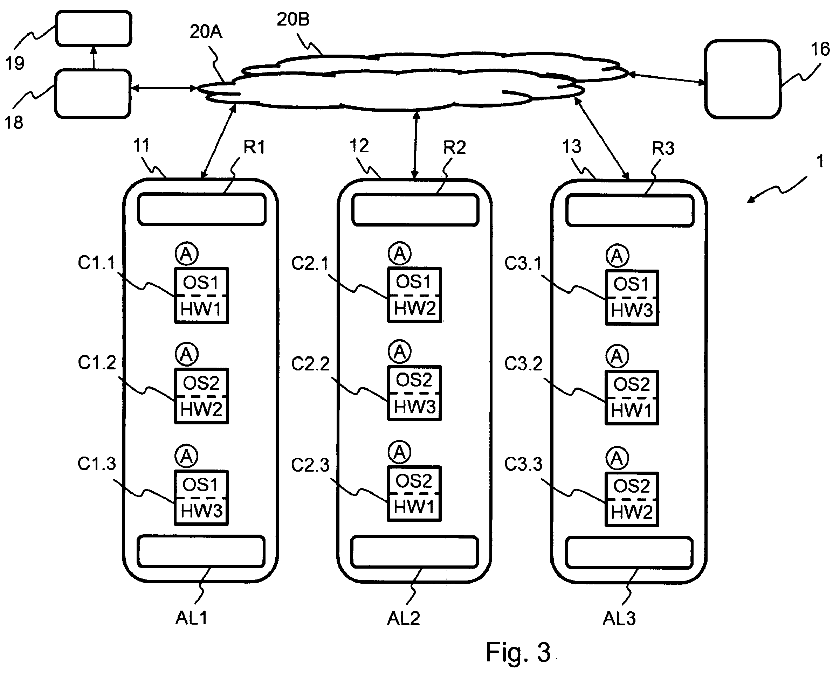

Le système de commande 1 représenté sur la figure 3 est similaire à celui décrit précédemment en référence à la figure 1. Toutefois, chacune des trois unités physiques 11, 12, 13 comporte en outre un troisième calculateur, respectivement C1.3, C2.3, C3.3. Ces calculateurs sont choisis de telle sorte que les trois calculateurs de chaque unité physique sont de trois types matériels différents : HW1, HW2 et HW3. Les trois calculateurs C1.3, C2.3, C3.3 sont eux aussi configurés pour mettre en oeuvre la première fonction. Par conséquent, le système de commande 1 comporte neuf calculateurs qui sont tous configurés pour élaborer indépendamment les ordres de commande du dispositif commandé 19 et pour transmettre chacun ces ordres de commande sur les réseaux de communication 20A et 20B par l'intermédiaire du dispositif d'interface réseau R1, R2 ou R3 auquel il est relié. De préférence, ces neuf calculateurs ont chacun un niveau d'assurance qualité matériel et/ou logiciel DAL-C. Du fait de l'utilisation de neuf calculateurs d'au moins trois types différents, ces calculateurs correspondant à un niveau d'assurance qualité DAL-C, la probabilité d'une panne totale du système de commande 1 est suffisamment faible pour être compatible avec l'exigence de niveau d'assurance qualité DAL-A de la première fonction. Le terme de panne totale du système de commande 1 est utilisé pour désigner une panne dudit système de commande qui rendrait impossible la détermination des ordres de commande du dispositif commandé 19 conformément à la première fonction ou leur transmission à l'unité logique de sélection 16. Une telle panne totale ne pourrait intervenir que si aucun des calculateurs ne pouvait déterminer les ordres de commande du dispositif commandé 19 et transmettre ces ordres à l'unité logique de sélection 16. L'utilisation de calculateurs correspondant à un niveau d'assurance qualité DAL-C permet une réduction importante des temps de développement et des coûts desdits calculateurs par rapport aux calculateurs, correspondant à un niveau d'assurance qualité DAL-A, classiquement utilisés pour mettre en oeuvre cette première fonction.

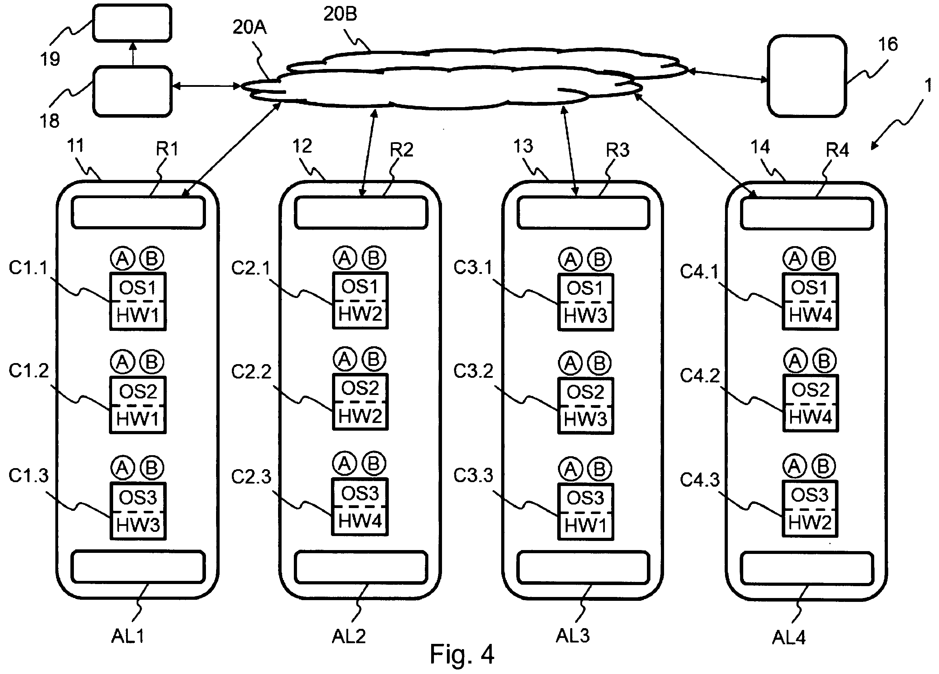

Le système de commande 1 représenté sur la figure 4 est similaire à celui décrit précédemment en référence à la figure 3. Toutefois, il comporte en outre une quatrième unité physique 14, laquelle comprend elle aussi trois calculateurs C4.1, C4.2 et C4.3 de deux types différents. Ces trois calculateurs sont eux aussi configurés pour mettre en oeuvre la première fonction. Les douze calculateurs des quatre unités physiques sont de quatre types matériels différents HW1, HW2, HW3 et HW4. La quatrième unité physique 14 comprend une alimentation électrique AL4 d'un type différent des alimentations électriques des trois autres unités physiques, de telle façon que les alimentations électriques AL1, AL2, AL3 et AL4 des quatre unités physiques sont de quatre types différents. Cette quatrième unité physique 14 comprend aussi un dispositif d'interface réseau R4 d'un type différent des dispositifs d'interface réseau des trois autres unités physiques, de telle façon que les dispositifs d'interface réseau R1, R2, R3 et R4 des quatre unités physiques sont de quatre types différents. De préférence, les différentes alimentations électriques AL1, AL2, AL3, AL4 et les différents dispositifs d'interface réseau R1, R2, R3, R4 ont chacun un niveau d'assurance qualité matériel et/ou logiciel DAL-E. Les systèmes d'exploitation des trois calculateurs de chacune des quatre unités physiques sont de trois types différents OS1, OS2, OS3. De préférence, les douze calculateurs ont chacun un niveau d'assurance qualité matériel et/ou logiciel DAL-E, ce qui permet une réduction importante de leur coût par rapport aux calculateurs, correspondant à un niveau d'assurance qualité DAL-A, classiquement utilisés pour mettre en oeuvre la première fonction. De plus, cela permet d'utiliser des calculateurs disponibles dans le commerce, sans nécessiter un développement spécifique : il en résulte une réduction importante du temps de développement du système de commande 1, surtout en ce qui concerne son aspect matériel. Cela permet, de plus, d'utiliser des calculateurs disponibles dans le commerce au moment de leur intégration dans le système de commande 1, sans avoir besoin de stocker des calculateurs correspondant à plusieurs années de production de tels systèmes de commande.

Le système de commande 1 utilise donc des composants très dissimilaires : quatre types d'alimentations électriques, quatre types de dispositifs d'interface réseaux, quatre types matériels de calculateurs, trois types de systèmes d'exploitation des calculateurs. De plus, il utilise un nombre important de calculateurs, permettant un niveau de redondance élevé, puisque les douze calculateurs précités sont tous configurés pour mettre en oeuvre la première fonction en élaborant indépendamment les ordres de commande du dispositif commandé 19. Cet ensemble de caractéristiques permet, bien que ces composants soient des composants disponibles dans le commerce, correspondant donc à un niveau d'assurance qualité DAL-E, d'obtenir une probabilité de panne totale du système de commande 1 suffisamment faible pour être compatible avec l'exigence de niveau d'assurance qualité DAL-A de la première fonction.

Dans un mode de réalisation avantageux, les douze calculateurs des quatre unités physiques sont en outre configurés pour mettre en oeuvre au moins une autre fonction ayant une exigence de niveau d'assurance qualité DAL-A. Cela permet de mettre en oeuvre une pluralité de fonctions ayant une exigence de niveau d'assurance qualité DAL-A au moyen des mêmes calculateurs.

Dans un mode particulier de réalisation, les douze calculateurs des quatre unités physiques, ou au moins un sous-ensemble desdits douze calculateurs, sont en outre configurés pour mettre en oeuvre au moins une fonction ayant une exigence de niveau d'assurance qualité DAL-B. Cela permet donc d'utiliser les mêmes calculateurs pour mettre en oeuvre à la fois des fonctions ayant une exigence de niveau d'assurance qualité DAL-A et des fonctions ayant une exigence de niveau d'assurance qualité DAL-B, de façon à limiter le nombre de calculateurs utilisés.

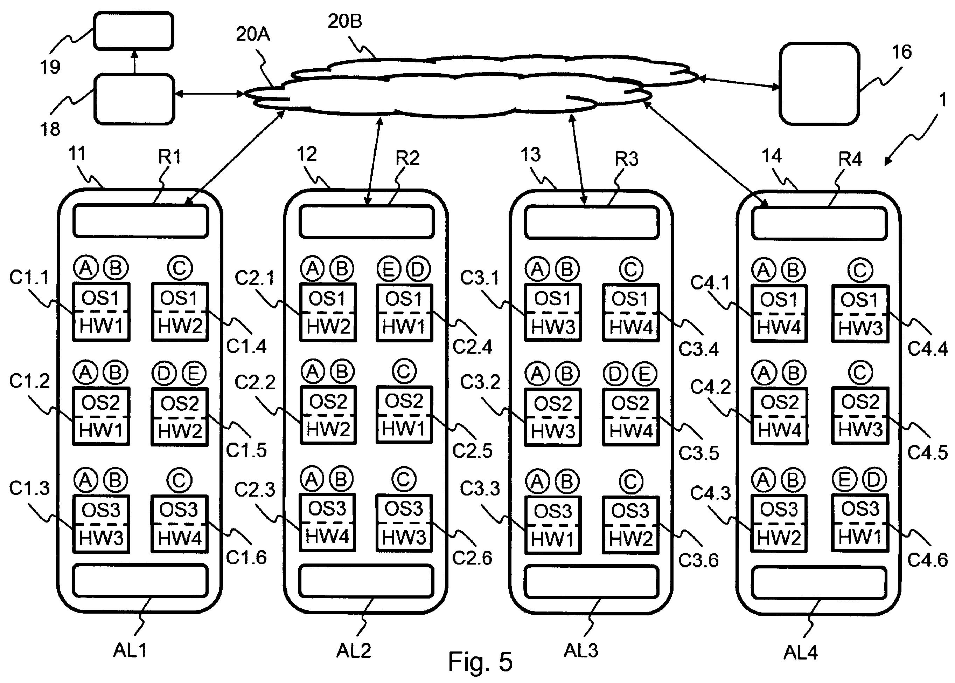

Dans un mode de réalisation avantageux représenté sur la figure 5, les quatre unités physiques 11, 12, 13, 14 comportent en outre chacune trois calculateurs supplémentaires. Ainsi, l'unité physique 11 comporte en outre les calculateurs C1.4, C1.5 et C1.6 ; l'unité physique 12 comporte en outre les calculateurs C2.4, C2.5 et C2.6 ; l'unité physique 13 comporte en outre les calculateurs C3.4, C3.5 et C3.6 ; l'unité physique 14 comporte en outre les calculateurs C4.4, C4.5 et C4.6. Ces calculateurs supplémentaires ont chacun un niveau d'assurance qualité matériel et/ou logiciel DAL-E. Ils sont configurés pour mettre en oeuvre au moins une fonction ayant une exigence de niveau d'assurance qualité DAL-C, DAL-D ou DAL-E, en élaborant des ordres de commande correspondant à cette fonction. Pour cela, une application logicielle correspondant à cette fonction est chargée dans chacun desdits calculateurs. Cette application logicielle respecte les exigences de niveau d'assurance qualité DAL-C, DAL-D ou DAL-E de ladite fonction à laquelle elle correspond. Ces calculateurs supplémentaires ne sont pas configurés pour mettre en oeuvre une fonction ayant une exigence de niveau d'assurance qualité DAL-A ou DAL-B. Ce mode de réalisation permet de pouvoir aussi mettre en oeuvre, dans le même dispositif de commande 1, au moins une fonction ayant une exigence de niveau d'assurance qualité DAL-C, DAL-D ou DAL-E, tout en garantissant une ségrégation entre d'une part les fonctions ayant une exigence de niveau d'assurance qualité DAL-A ou DAL-B et d'autre part les fonctions ayant une exigence de niveau d'assurance qualité DAL-C, DAL-D ou DAL-E. Ainsi, la mise en oeuvre des fonctions ayant une exigence de niveau d'assurance qualité DAL-C, DAL-D ou DAL-E ne risque pas d'interférer avec la mise en oeuvre des fonctions ayant une exigence de niveau d'assurance qualité DAL-A ou DAL-B pour lesquelles une défaillance pourrait avoir un impact catastrophique ou dangereux pour l'aéronef. Pour mettre en oeuvre cette au moins une fonction ayant une exigence de niveau d'assurance qualité DAL-C, DAL-D ou DAL-E, le dispositif de commande 1 comporte en outre au moins une autre unité logique de sélection (non représentée), laquelle est configurée pour sélectionner des ordres de commande valides parmi les ordres de commande élaborés par les calculateurs supplémentaires. Avantageusement, le niveau d'assurance qualité matériel et logiciel de cette autre unité logique de sélection correspond au niveau d'assurance qualité de ladite fonction.

Dans un exemple particulier de réalisation de l'invention, illustré par la figure 5, parmi ces calculateurs supplémentaires, deux calculateurs de chaque unité physique sont configurés pour mettre en oeuvre au moins une fonction ayant une exigence de niveau d'assurance qualité DAL-C, à savoir les calculateurs C1.4, C1.6, C2.5, C2.6, C3.4, C3.6, C4.4 et C4.5. Ces calculateurs ne sont pas configurés pour mettre en oeuvre une fonction ayant une exigence de niveau d'assurance qualité DAL-D ou DAL-E. L'autre calculateur supplémentaire de chaque unité physique est configuré pour mettre en oeuvre au moins une fonction ayant une exigence de niveau d'assurance qualité DAL-D ou DAL-E. Quatre calculateurs sont ainsi réservés pour les fonctions ayant une exigence de niveau d'assurance qualité DAL-D ou DAL-E, à savoir les calculateurs C1.5, C2.4, C3.5 et C4.6. Cela permet de garantir une ségrégation entre d'une part des fonctions ayant une exigence de niveau d'assurance qualité DAL-C et d'autre part des fonctions ayant une exigence de niveau d'assurance qualité DAL-D ou DAL-E. Ainsi, la mise en oeuvre des fonctions ayant une exigence de niveau d'assurance qualité DAL-D ou DAL-E ne risque pas d'interférer avec la mise en oeuvre des fonctions ayant une exigence de niveau d'assurance qualité DAL-C.

Dans les différents modes de réalisation précités, les calculateurs ayant un niveau d'assurance qualité matériel et/ou logiciel DAL-E correspondent avantageusement à des calculateurs disponibles dans le commerce sous la forme chacun d'une carte circuit imprimé regroupant l'ensemble des composants constituant ce calculateur. Généralement la surface d'une telle carte circuit imprimé est de seulement quelques centimètres carrés. Un tel calculateur peut aussi se présenter sous la forme d'un boîtier miniature de taille sensiblement similaire à la taille d'une clef USB^{®}. Chaque unité physique se présente alors sous la forme d'un boîtier regroupant une alimentation électrique, un dispositif d'interface réseau correspondant par exemple à un commutateur ou à un routeur Ethernet disponible dans le commerce, ainsi que les différents calculateurs de ladite unité physique. Etant donné la taille miniature des différents calculateurs, chaque unité physique présente une taille et une masse très réduites. Il en résulte que l'encombrement et la masse du dispositif de commande 1 sont fortement réduits par rapport à l'encombrement et à la masse d'un dispositif de commande conventionnel. Cela permet de réduire la consommation de carburant de l'aéronef ou de transporter davantage de passagers. Cela permet également de faciliter l'intégration des unités physiques dans l'aéronef. Ainsi, ces unités physiques ne sont pas nécessairement intégrées dans une baie avionique de l'aéronef comme les calculateurs de l'art antérieur.

Les calculateurs disponibles dans le commerce requièrent généralement des conditions environnementales moins sévères que les conditions environnementales auxquelles sont susceptibles d'être exposés les calculateurs habituellement utilisés à bord des aéronefs. Ces conditions environnementales sont notamment relatives à la température et aux vibrations. Elles peuvent également inclure la protection contre la foudre ou contre des perturbations électromagnétiques, etc. Toutefois, les conditions environnementales à l'intérieur de la cabine de l'aéronef sont généralement compatibles avec le fonctionnement desdits calculateurs disponibles dans le commerce. Par conséquent, selon un mode de réalisation, les différentes unités physiques 11, 12, 13, 14 sont installées à l'intérieur de la cabine de l'aéronef.

Toutefois, dans certains cas, des contraintes d'installation peuvent rendre nécessaire d'installer les unités physiques en dehors de la cabine de l'aéronef, par exemple dans une soute non climatisée et/ou non pressurisée de l'aéronef. Afin de répondre à un tel besoin, selon un mode préféré de réalisation, les différentes unités physiques sont protégées par au moins un dispositif de protection environnementale correspondant à l'un au moins des dispositifs suivants :
- un dispositif de conditionnement d'air ;
- un dispositif d'amortissement des vibrations ;
- un dispositif de protection contre les perturbations électromagnétiques.

Selon une première alternative, cet au moins un dispositif est spécifique à chaque unité physique. Par exemple, chaque unité physique dispose de son propre dispositif de conditionnement d'air ou d'amortissement des vibrations. Selon une autre alternative, cet au moins un dispositif est commun à une pluralité desdites unités physiques. Par exemple, plusieurs unités physiques sont regroupées lors de leur installation et utilisent un même dispositif de conditionnement d'air et/ou d'amortissement des vibrations.

Selon une première variante, l'unité logique de sélection 16 est intégrée dans un calculateur distinct de l'unité de contrôle 18 associée au dispositif commandé 19. Ce calculateur peut ainsi héberger également une ou plusieurs autres unités logiques de sélection correspondant à un ou plusieurs autres dispositifs commandés.

Selon une autre variante, l'unité logique de sélection 16 est intégrée dans l'unité de contrôle 18 associée au dispositif commandé 19.

Dans un exemple particulier de réalisation conforme à l'invention, illustré par la figure 6, la première fonction correspond à des commandes de vol de l'aéronef. Le dispositif commandé 19 comprend un actionneur d'une surface de vol mobile de l'aéronef. Cette surface de vol mobile correspond par exemple à un volet ou à un aileron 55, 56 ou à une gouverne de profondeur 52, 53. D'autres surfaces de vol mobiles de l'aéronef peuvent être considérées sans sortir du cadre de l'invention. Des unités de contrôle 42, 43, 45, 46 sont respectivement associées aux gouvernes de profondeur 52, 53 et aux volets et/ou ailerons 55, 56. Ces unités de contrôle sont reliées à un ensemble 20 d'au moins deux réseaux de communication tels que précités. Dans l'exemple représenté sur la figure 6, une unité logique de sélection, non représentée, est intégrée dans chacune des unités de contrôle 42, 43, 45, 46. Toutefois, sans sortir du cadre de l'invention, il pourrait être prévu un autre calculateur raccordé à l'ensemble 20 de réseaux de communication et hébergeant plusieurs unités logiques de sélection associées respectivement à chacune des unités de contrôle 42, 43, 45, 46 et donc à chacune des surfaces de vol mobiles respectives 52, 53, 55, 56. Quatre unités physiques 11, 12, 13, 14 conformes à l'un des modes de réalisation précités sont également reliées à l'ensemble 20 de réseaux de communication. Pour des raisons de ségrégation, les unités physiques 11 et 14 sont situées dans une partie avant du fuselage de l'aéronef, les unités physiques 12 et 13 étant quant à elles situées dans une partie arrière du fuselage. De plus, les unités physiques 11 et 12 sont situées du côté gauche du fuselage et les unités physiques 13 et 14 sont situées du côté droit du fuselage. Deux unités d'interface 41 et 44 sont également reliées à cet ensemble 20 de réseaux de communication. Ces unités d'interface sont aussi reliées respectivement à des moyens de commande 47 et 48 situés dans le cockpit, par exemple des manches ou des mini-manches.

En fonctionnement, les pilotes de l'aéronef agissent sur les manches 47, 48 qui produisent des signaux électriques fonction de leurs positions et représentant des ordres donnés par les pilotes. Ces signaux sont reçus par les unités d'interface respectives 41 et 44 qui envoient en conséquence des informations représentatives des ordres donnés par les pilotes, sur l'ensemble 20 de réseaux de communication, à destination des quatre unités physiques 11, 12, 13, 14. Ces informations sont reçues par les calculateurs desdites unités physiques configurés pour élaborer des ordres de commande correspondant à ladite première fonction, c'est-à-dire des ordres de commande des surfaces de vol mobiles 52,53, 55, 56. Ces calculateurs élaborent ces ordres de commande indépendamment les uns des autres, selon des lois de commande de vol de l'aéronef, en fonction desdites informations représentatives des ordres donnés par les pilotes. Chaque calculateur calcule des ordres de commande pour les différentes surfaces de vol mobiles 52, 53, 55, 56 et envoie ces ordres sur l'ensemble 20 de réseaux de communication, à destination des unités logiques de sélection respectivement associées à chacune desdites surfaces de vol mobiles. Ainsi, chaque unité logique de sélection associée à l'une des surfaces de vol mobiles 52, 53, 55, 56 reçoit les ordres de commande élaborés par les différents calculateurs pour cette surface de vol mobile. Cette unité logique de sélection sélectionne des ordres de commande valides parmi les ordres de commande reçus des différents calculateurs. Pour sélectionner ces ordres de commande valides, l'unité logique de sélection peut par exemple utiliser un voteur. Elle transmet les ordres ainsi sélectionnés vers l'unité de contrôle associée à la surface de vol mobile considérée et cette unité de contrôle commande ladite surface de vol en conséquence.

## Revendications

1. Système de commande (1) d'au moins un dispositif commandé (19) d'un aéronef, ce système de commande pouvant être embarqué dans l'aéronef et comportant:
- au moins deux réseaux de communication distincts (20A, 20B) ; et
- au moins une unité de contrôle (18) associée à cet au moins un dispositif commandé (19), cette unité de contrôle étant raccordée à l'un au moins desdits réseaux de communication (20A, 20B),
ledit système de commande étant configuré pour déterminer et fournir des ordres de commande à ce dispositif commandé, la détermination desdits ordres de commande correspondant à une première fonction de l'aéronef ayant une exigence de niveau d'assurance qualité DAL-A,
**caractérisé en ce que** ledit système de commande comporte en outre :
- un ensemble d'au moins trois unités physiques (11, 12, 13, 14) comportant chacune une alimentation électrique (AL1, AL2, AL3, AL4) et un dispositif d'interface réseau (R1, R2, R3, R4) raccordé à l'un au moins desdits réseaux de communication (20A, 20B) de l'aéronef, dans lequel :
. les alimentations électriques des différentes unités physiques sont d'au moins trois types différents ;
. les dispositifs d'interface réseau des différentes unités physiques sont d'au moins trois types différents ;
. chacune des unités physiques comporte au moins deux calculateurs (C1.1, C1.2, ... C4.6) comprenant chacun un système d'exploitation ;
. les différents calculateurs des différentes unités sont d'au moins deux types différents ;
. les systèmes d'exploitation des différents calculateurs sont d'au moins deux types différents ;
. au moins six desdits calculateurs sont configurés pour élaborer indépendamment des ordres de commande dudit dispositif commandé, ces ordres de commande correspondant à ladite première fonction ;
. les différents calculateurs ont chacun un niveau d'assurance qualité matériel et/ou logiciel DAL-C, DAL-D ou DAL-E ;
et
- une unité logique de sélection(16) dont le niveau d'assurance qualité matériel et logiciel est DAL-A, cette unité logique de sélection étant raccordée à ces au moins deux réseaux de communication (20A, 20B) et étant configurée pour sélectionner des ordres de commande valides parmi les ordres de commande élaborés par les calculateurs,
l'unité de contrôle (18) associée audit dispositif commandé (19) étant configurée pour commander le dispositif commandé en fonction des ordres de commande valides sélectionnés par l'unité logique de sélection (16).

2. Système de commande selon la revendication 1 dans lequel lesdits au moins six calculateurs sont configurés pour élaborer les ordres de commande du dispositif commandé, correspondant à la première fonction, selon un mode d'élaboration desdits ordres de commande commun à ces au moins six calculateurs.

3. Système de commande selon la revendication 1 ou la revendication 2 dans lequel les différentes alimentations électriques (AL1, AL2, AL3, AL4) et les différents dispositifs d'interface réseau (R1, R2, R3, R4) ont chacun un niveau d'assurance qualité matériel et/ou logiciel DAL-E.

4. Système de commande selon l'une quelconque des revendications 1 à 3 dans lequel l'ensemble d'unités physiques comporte trois unités physiques (11, 12, 13) comprenant chacune trois calculateurs de trois types différents, les différents calculateurs ayant chacun un niveau d'assurance qualité matériel et/ou logiciel DAL-C.

5. Système de commande selon l'une quelconque des revendications 1 à 3 dans lequel l'ensemble d'unités physiques comporte quatre unités physiques (11, 12, 13, 14) comprenant chacune au moins trois calculateurs ayant chacun un niveau d'assurance qualité matériel et/ou logiciel DAL-E, dans lequel :
. les différents calculateurs sont de quatre types différents ;
. chaque unité physique comporte des calculateurs d'au moins deux types différents ;
. les alimentations électriques des quatre unités physiques sont toutes de types différents ;
. les dispositifs d'interface réseau des quatre unités physiques sont tous de types différents ;
. les systèmes d'exploitation des au moins trois calculateurs de chaque unité physique sont d'au moins trois types différents.

6. Système de commande selon la revendication 5 dans lequel chacune des quatre unités physiques comporte trois calculateurs de deux types différents, chaque calculateur étant configuré pour élaborer des ordres de commande du dispositif commandé, ces ordres de commande correspondant à ladite première fonction.

7. Système de commande selon la revendication 5 dans lequel chacune des quatre unités physiques comporte six calculateurs ayant chacun un niveau d'assurance qualité matériel et/ou logiciel DAL-E.

8. Système de commande selon la revendication 7 dans lequel une partie des calculateurs n'est pas configurée pour mettre en oeuvre une fonction ayant une exigence de niveau d'assurance qualité DAL-A ou DAL-B, ces calculateurs étant configurés pour mettre en oeuvre au moins une seconde fonction ayant une exigence de niveau d'assurance qualité DAL-C, DAL-D ou DAL-E.

9. Système de commande selon l'une quelconque des revendications 4 à 8 dans lequel au moins une partie des calculateurs configurés pour élaborer les ordres de commande correspondant à ladite première fonction sont également configurés pour mettre en oeuvre au moins une troisième fonction ayant une exigence de niveau d'assurance qualité DAL-A ou DAL-B.

10. Système de commande selon l'une quelconque des revendications précédentes dans lequel l'unité logique de sélection (16) est intégrée dans un calculateur distinct de l'unité de contrôle (18) associée au dispositif commandé (19).

11. Système de commande selon l'une quelconque des revendications 1 à 9 dans lequel l'unité logique de sélection (16) est intégrée dans l'unité de contrôle (18) associée au dispositif commandé (19).

12. Système de commande selon l'une quelconque des revendications précédentes dans lequel la première fonction est relative à des commandes de vol de l'aéronef et le dispositif commandé (19) comprend un actionneur d'une surface de vol mobile (52, 53, 55, 56) de l'aéronef.

13. Système de commande selon l'une quelconque des revendications précédentes dans lequel les différentes unités physiques sont protégées par au moins un dispositif de protection environnementale.

14. Aéronef (2) comportant un système de commande (1) selon l'une quelconque des revendications précédentes.

## Patentansprüche

1. System (1) zum Steuern wenigstens einer gesteuerten Vorrichtung (19) eines Flugzeugs, wobei das Steuersystem an Bord des Flugzeugs installiert sein kann und Folgendes umfasst:
- wenigstens zwei verschiedene Kommunikationsnetze (20A, 20B); und
- wenigstens eine Steuereinheit (18) die dieser wenigstens einen gesteuerten Vorrichtung (19) zugeordnet ist, wobei diese Steuereinheit mit wenigstens einem der Kommunikationsnetze (20A, 20B) verbunden ist,
wobei das Steuersystem konfiguriert ist, Steuerbefehle zu bestimmen und an diese gesteuerte Vorrichtung zu liefern, wobei das Bestimmen der Steuerbefehle einer ersten Funktion des Flugzeugs entspricht, die eine Sicherheitsgüteniveau-Anforderung DAL-A hat,
**dadurch gekennzeichnet, dass** das Steuersystem außerdem Folgendes umfasst:
- eine Anordnung aus wenigstens drei physikalischen Einheiten (11, 12, 13, 14), die jeweils eine elektrische Versorgung (AL1, AL2, AL3, AL4) und eine Netzschnittstellenvorrichtung (R1, R2, R3, R4), die mit wenigstens einem der Kommunikationsnetze (20A, 20B) des Flugzeugs verbunden ist, enthalten, wobei:
• die elektrischen Versorgungen der verschiedenen physikalischen Einheiten von wenigstens drei verschiedenen Typen sind;
• die Netzschnittstellenvorrichtungen der verschiedenen physikalischen Einheiten von wenigstens drei verschiedenen Typen sind;
• jede der physikalischen Einheiten wenigstens zwei Rechner (C1.1, C1.2, ..., C4.6) enthält, wovon jeder ein Betriebssystem enthält;
• die verschiedenen Rechner der verschiedenen Einheiten von wenigstens zwei verschiedenen Typen sind;
• die Betriebssysteme der verschiedenen Rechner von wenigstens zwei verschiedenen Typen sind;
• wenigstens sechs der Rechner konfiguriert sind, Steuerbefehle der gesteuerten Vorrichtung unabhängig zu erstellen, wobei diese Steuerbefehle der ersten Funktion entsprechen;
• die verschiedenen Rechner jeweils ein Hardware- und/oder der Software-Sicherheitsgüteniveau, DAL-C, DAL-D oder DAL-E haben; und
- eine Logikauswahleinheit (16), deren Hardware- und der Software-Sicherheitsgüteniveau DAL-A ist, wobei diese Logikauswahleinheit mit diesen wenigstens zwei Kommunikationsnetzen (20A, 20B) verbunden ist und konfiguriert ist, gültige Steuerbefehle aus den durch die Rechner erstellten Steuerbefehlen auszuwählen, wobei die Steuereinheit (18), die der gesteuerten Vorrichtung (19) zugeordnet ist, konfiguriert ist, die gesteuerte Vorrichtung als Funktion der gültigen Steuerbefehle, die durch die Logikauswahleinheit (16) ausgewählt werden, zu steuern.

2. Steuersystem nach Anspruch 1, wobei die wenigstens sechs Rechner konfiguriert sind, Steuerbefehle der gesteuerten Vorrichtung, die der ersten Funktion entsprechen, gemäß einem Modus zum Erstellen der Steuerbefehle, die diesen wenigstens sechs Rechnern gemeinsam ist, zu erstellen.

3. Steuersystem nach Anspruch 1 oder Anspruch 2, wobei die verschiedenen elektrischen Versorgungen (AL1, AL2, AL3, AL4) und die verschiedenen Netzschnittstellenvorrichtungen (R1, R2, R3, R4) jeweils ein Hardware- und/oder Software-Sicherheitsgüteniveau DAL-E haben.

4. Steuersystem nach einem der Ansprüche 1 bis 3, wobei die Anordnung physikalischer Einheiten drei physikalische Einheiten (11, 12, 13) umfasst, die jeweils drei Rechner von drei verschiedenen Typen enthalten, wobei die verschiedenen Rechner jeweils ein Hardware- und/oder Software-Sicherheitsgüteniveau DAL-C haben.

5. Steuersystem nach einem der Ansprüche 1 bis 3, wobei die Anordnung physikalischer Einheiten vier physikalische Einheiten (11, 12, 13, 14) umfasst, die jeweils wenigstens drei Rechner enthalten, wovon jeder ein Hardware- und/oder Software-Sicherheitsgüteniveau DAL-E hat, wobei:
• die verschiedenen Rechner von vier verschiedenen Typen sind;
• jede physikalische Einheit Rechner von wenigstens zwei verschiedenen Typen enthält;
• die elektrischen Versorgungen der vier physikalischen Einheiten alle von verschiedenen Typen sind;
• die Netzschnittstellenvorrichtungen der vier physikalischen Einheiten alle von verschiedenen Typen sind, und
• die Betriebssysteme der wenigstens drei Rechner jeder physikalischen Einheit von wenigstens drei verschiedenen Typen sind.

6. Steuersystem nach Anspruch 5, wobei jede der vier physikalischen Einheiten drei Rechner von zwei verschiedenen Typen enthält, wobei jeder Rechner konfiguriert ist, Steuerbefehle der gesteuerten Vorrichtung zu erstellen, wobei diese Steuerbefehle der ersten Funktion entsprechen.

7. Steuersystem nach Anspruch 5, wobei jede der vier physikalischen Einheiten sechs Rechner enthält, die jeweils ein Hardware und/oder Software-Sicherheitsgüteniveau DAL-E haben.

8. Steuersystem nach Anspruch 7, wobei ein Teil der Rechner nicht konfiguriert ist, eine Funktion auszuführen, die eine Sicherheitsgüteniveau-Anforderung DAL-A oder DAL-B hat, wobei diese Rechner konfiguriert sind, wenigstens eine zweite Funktion auszuführen, die eine Sicherheitsgüteniveau-Anforderung DAL-C, DAL-D oder DAL-E hat.

9. Steuersystem nach einem der Ansprüche 4 bis 8, wobei wenigstens ein Teil der Rechner, die konfiguriert sind, die Steuerbefehle zu erstellen, die der ersten Funktion entsprechen, auch konfiguriert ist, wenigstens eine dritte Funktion auszuführen, die eine Sicherheitsgüteniveau-Anforderung DAL-A oder DAL-B hat.

10. Steuersystem nach einem der vorhergehenden Ansprüche, wobei die Logikauswahleinheit (16) in einen Rechner integriert ist, der von der Steuereinheit (18) verschieden ist, die der gesteuerten Vorrichtung (19) zugeordnet ist.

11. Steuersystem nach einem der Ansprüche 1 bis 9, wobei die Logikauswahleinheit (16) in die Steuereinheit (18) integriert ist, die der gesteuerten Vorrichtung (19) zugeordnet ist.

12. Steuersystem nach einem der vorhergehenden Ansprüche, wobei die erste Funktion auf Befehle für den Flug des Flugzeugs bezogen ist und die gesteuerte Vorrichtung (19) einen Aktor einer beweglichen Flugoberfläche (52, 53, 55, 56) des Flugzeugs enthält.

13. Steuersystem nach einem der vorhergehenden Ansprüche, wobei die verschiedenen physikalischen Einheiten durch wenigstens eine Umgebungsschutzvorrichtung geschützt sind.

14. Flugzeug (2), das ein Steuersystem (1) nach einem der vorhergehenden Ansprüche umfasst.

## Claims

1. Control system (1) for at least one controlled device (19) of an aircraft, this control system being able to be embedded onboard the aircraft and comprising:
- at least two distinct communication networks (20A, 20B); and
- at least one control unit (18) associated with this at least one controlled device (19), this control unit being connected to at least one of the said communication networks (20A, 20B),
the said control system being configured to determine and provide control commands to this controlled device, the determination of the said control commands corresponding to a first function of the aircraft having a DAL-A quality assurance level requirement,
**characterized in that** the said control system furthermore comprises:
- a set of at least three physical units (11, 12, 13, 14) each comprising an electrical power supply (AL1, AL2, AL3, AL4) and a network interface device (R1, R2, R3, R4) connected to at least one of the said communication networks (20A, 20B) of the aircraft, in which:
. the electrical power supplies of the various physical units are of at least three different types;
. the network interface devices of the various physical units are of at least three different types;
. each of the physical units comprises at least two computers (C1.1, C1.2, ... C4.6) each comprising an operating system;
. the various computers of the various units are of at least two different types;
. the operating systems of the various computers are of at least two different types;
. at least six of the said computers are configured to independently determine control commands for the said controlled device, these control commands corresponding to the said first function;
. the various computers each have a DAL-C, DAL-D or DAL-E hardware and/or software quality assurance level;
and
- a selection logic unit (16) whose hardware and software quality assurance level is DAL-A, this selection logic unit being connected to these at least two communication networks (20A, 20B) and being configured to select valid control commands from among the control commands determined by the computers,
the control unit (18) associated with the said controlled device (19) being configured to control the controlled device as a function of the valid control commands selected by the selection logic unit (16).

2. Control system according to Claim 1, in which the said at least six computers are configured to determine the control commands for the controlled device, corresponding to the first function, according to a mode of formulation of the said control commands that is common to these at least six computers.

3. Control system according to Claim 1 or Claim 2, in which the various electrical power supplies (AL1, AL2, AL3, AL4) and the various network interface devices (R1, R2, R3, R4) each have a DAL-E hardware and/or software quality assurance level.

4. Control system according to any one of Claims 1 to 3, in which the set of physical units comprises three physical units (11, 12, 13) each comprising three computers of three different types, the various computers each having a DAL-C hardware and/or software quality assurance level.

5. Control system according to any one of Claims 1 to 3, in which the set of physical units comprises four physical units (11, 12, 13, 14) each comprising at least three computers each having a DAL-E hardware and/or software quality assurance level, in which:
. the various computers are of four different types;
. each physical unit comprises computers of at least two different types;
. the electrical power supplies of the four physical units are all of different types;
. the network interface devices of the four physical units are all of different types;
. the operating systems of the at least three computers of each physical unit are of at least three different types.

6. Control system according to Claim 5, in which each of the four physical units comprises three computers of two different types, each computer being configured to determine control commands for the controlled device, these control commands corresponding to the said first function.

7. Control system according to Claim 5, in which each of the four physical units comprises six computers each having a DAL-E hardware and/or software quality assurance level.

8. Control system according to Claim 7, in which a part of the computers is not configured to implement a function having a DAL-A or DAL-B quality assurance level requirement, these computers being configured to implement at least one second function having a DAL-C, DAL-D or DAL-E quality assurance level requirement.

9. Control system according to any one of Claims 4 to 8, in which at least part of the computers configured to determine the control commands corresponding to the said first function are also configured to implement at least one third function having a DAL-A or DAL-B quality assurance level requirement.

10. Control system according to any one of the preceding claims, in which the selection logic unit (16) is integrated into a computer distinct from the control unit (18) associated with the controlled device (19).

11. Control system according to any one of Claims 1 to 9, in which the selection logic unit (16) is integrated into the control unit (18) associated with the controlled device (19).

12. Control system according to any one of the preceding claims, in which the first function relates to flight controls of the aircraft and the controlled device (19) comprises an actuator of a movable flight surface (52, 53, 55, 56) of the aircraft.

13. Control system according to any one of the preceding claims, in which the various physical units are protected by at least one environmental protection device.

14. Aircraft (2) comprising a control system (1) according to any one of the preceding claims.
